# EUROPEAN PATENT APPLICATION

(11) **EP 1 418 065 A1**
(43) Date of publication of application: **12.05.2004**
(21) Application number: 02024756.5
(22) Date of filing: 06.11.2002
(51) Int. Cl.: B60B 21/08, F16D 65/12

(54) **Wheel with braking track made of high friction material**

(71) Applicant: ISCA S.p.A, 36028 Rossano Veneto (Vicenza) (IT)
(72) Inventor: Bernardi, Marcolino, 36028 Rossano Veneto (VI) (IT)
(74) Representative: Petraz, Gilberto

(57) **Abstract**

Wheel for bicycles, motor cycles, mopeds, or motor cars, including a rim (11) defining a strip (14) which can cooperate with a respective braking element (15). On the strip (14) there is at least a circumferential seating (16), cooperating in coordination with the braking element (15), in which there is material with a high friction coefficient (17).

## Description

### FIELD OF THE INVENTION

The present invention concerns a wheel with a braking track made of a material with a high friction coefficient.

To be more exact, the invention concerns a wheel, for example for bicycles or for motorcycles, mopeds or similar, or again for motor cars, wherein the braking track comprises a circular strip on which at least a seating is made, filled with a material with a high friction coefficient and possibly loaded with substances able to increase friction and resistance to abrasion.

### BACKGROUND OF THE INVENTION

It is known that the wheels of bicycles and motor cycles have on their sides two bands or strips, normally made of aluminum, turned and smoothed plane and substantially parallel to each other; these strips constitute the "braking tracks" where the braking elements exert through friction their action to brake the bicycle.

Such braking elements can consist of pads in the simplest case, or grippers or levers in the case of disk or drum brakes, or other similar elements.

Brake pads are normally obtained by molding loaded rubbers, and differ in the mix according to the required braking action and working life. A softer mix gives a better braking action but rather a short working life, while a harder mix gives a less intense braking action but a longer duration in conditions of efficiency.

In the case where these pads are "loaded" with a high percentage of abrasive material in order to increase friction and hence the braking capacity, this causes rapid wear of the braking. track.

To avoid this problem, solutions have been proposed with a ceramic covering on the surface of the braking tracks. Such solutions however, although on the one hand they do increase the working life of the wheels, on the other hand they considerably reduce the efficiency of the braking action.

Moreover, conventional braking systems generally cause the wheel to block and this can create risks of skidding in the case of wet ground.

Furthermore, between the braking track and the pads situations may occur where the water is not very efficiently discharged, with the danger of a dispersion of the braking power due to the aquaplaning effect.

To overcome these shortcomings of the state of the art, and to obtain further advantages as will be shown hereafter, the Applicant has devised and embodied the present invention.

### SUMMARY OF THE INVENTION

The present invention is set forth and characterized in the main claim, while the dependent claims describe other characteristics of the main embodiment.

The purpose of the invention is to achieve a wheel, mainly for bicycles, motor cycles and mopeds equipped with braking elements, which has a braking track suitable to optimize the characteristics of efficacious braking action and duration in efficient conditions.

Another purpose is to obtain the above without the risk of rapid deterioration and wear both of the braking element and also of the braking track itself, also preventing on the one hand risks of the wheel undesired blocking and on the other hand the occurrence of effects such as aquaplaning between the braking track and the brake pads.

The invention is applied substantially in every type of wheel which has, on at least one side, at least a strip suitable to contain a containing seating. According to a first formulation, said strip is plane. According to another formulation, the strip is inclined with respect to the plane on which the wheel lies.

In another formulation, this strip has a curved concave development. In another formulation, this strip has a curved convex development. According to a variant, the strip has two plane surfaces at an angle to each other.

It comes within the spirit of the invention to provide a strip which is partly plane and partly curved.

In accordance with these purposes, the invention provides that on said at least one strip of the wheel at least a circumferential seating is made, located in a position such as to cooperate with the braking element, said seating being filled with a material with a high friction coefficient.

In a preferential embodiment, said material with a high friction coefficient is resinous material. According to a variant, loads, for example of metal or ceramic material, are added to said material with a high friction coefficient with the purpose of increasing resistance to abrasion and also to make the friction coefficient higher.

Thanks to the presence of this seating filled with material with a high friction coefficient, the braking element (pad, gripper or otherwise), during the braking action, acts on a mixed track which can be determined by the material which makes up the wheel and the material with a high friction coefficient. This allows to obtain on the one hand a plastic and modifiable braking action, with slight applications of force on the means which drive the braking element, and without vibrations, and on the other hand high resistance to wear and deterioration.

Therefore an immediate deceleration is obtained, especially at high speeds, even in situations where the ground is wet. Experiments have shown a reduction in the stopping distance, compared with a normal wheel, of about a third in normal, dry conditions, and about half in wet conditions.

The surface of the rim, consisting of segments made of resin alternating with segments of aluminum, retains very little water and, at the moment the pad contacts the rim, since there is no need to clean the track to remove any water, an immediate braking is obtained without any risk of the aquaplaning effect.

A first embodiment provides only one circumferential seating, with a width comprised between 1 and 10 mm, advantageously between 3 and 7 mm, so as to guarantee an adequate surface with which the braking element can cooperate. According to a variant, there are two or more concentric seatings, of adequate width, for example each of 1÷4 mm.

According to a first embodiment, the at least one containing seating to contain the material with a high friction coefficient is circumferentially continuous. According to a variant, said at least one seating is of the discontinuous type.

According to another variant, on its circumference said seating has variations in size, at least in width, which achieve correlated variations in the braking effect. In a preferential embodiment, these variations in size are distributed uniformly along the circumference of the wheel.

The presence of a discontinuous containing seating, or in any case not uniform in size, along the circumference of the wheel determines a braking effect substantially comparable to the anti-blocking effect of the wheel, with a further increase in the efficiency of the braking action.

According to one embodiment of the invention, the material with a high friction coefficient used is resin of the thermosetting type with a crystallization point at a temperature in the range of 140÷180 °C.

The possible loads which are incorporated into the material with a high friction coefficient in order to increase resistance to abrasion are, in a first embodiment, of the metallic powder type, for example titanium or stainless steel.

According to a variant, these loads are of the ceramic powder type, for example made of alumina, tungsten, boron or suchlike carbide.

According to another variant, the material with a high friction coefficient is a bi-component and can catalyze due to a chemical effect. According to one embodiment of the invention, the material with a high friction coefficient can be removed from the relative seating and replaced.

According to another variant, in order to guarantee that the material with a high friction coefficient adheres to the rim, primers or other adhesives of various types are applied, for example of a structural type, mono-component, bi-component, thermo-adhesive, cyanoacrylate, epoxy or other analogous or comparable types.

With the braking track obtained according to the invention a plastic and modifiable braking effect is obtained with slight applications of force to the lever or pedal of the brake. Moreover, the soft action can be decisive and controlled as required, simply by increasing by a slight degree the pressure of the braking element. These characteristics are maintained in any condition whatsoever of use, since they are not altered by the cold, the heat, or by dry or wet conditions.

Furthermore, a slight wear of the braking element is obtained, and a longer overall working life of the system.

### BRIEF DESCRIPTION OF THE DRAWINGS

These and other characteristics of the present invention will be apparent from the following description of a preferential form of embodiment, given as a non-restrictive example, with reference to the attached drawings wherein:
- fig. 1 is a front view of a wheel, in this case for a bicycle, comprising the braking track according to the invention;
- fig. 2 is a section from A to A of fig. 1 with the detail of the braking track cooperating with a braking element;
- figs. 3 and 4 show two variants, partly and on an enlarged scale, of the embodiment shown in fig. 1.

### DETAILED DESCRIPTION OF SOME PREFERENTIAL FORMS OF EMBODIMENT OF THE INVENTION

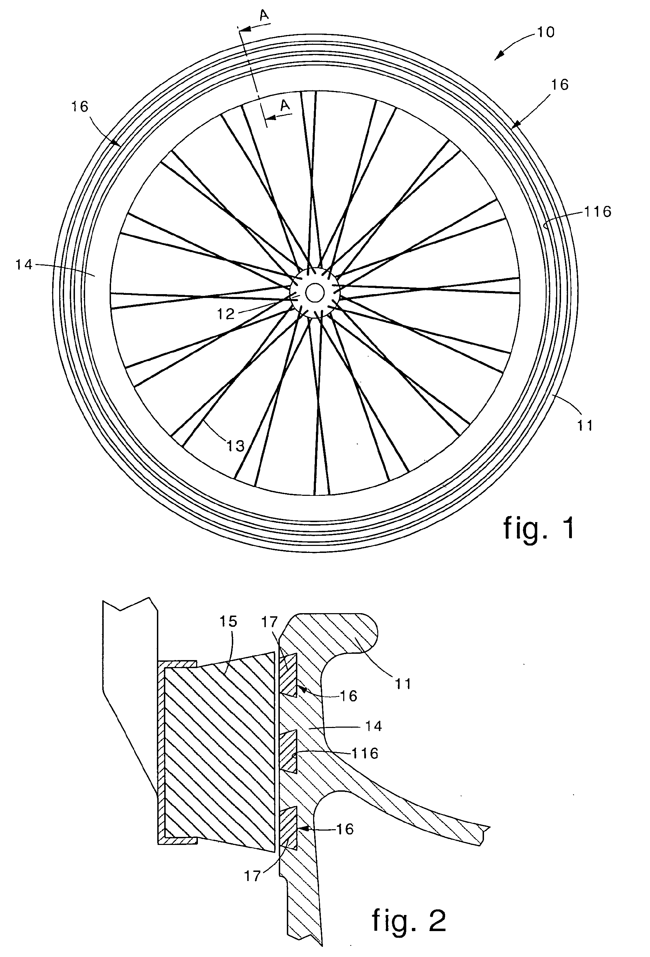

With reference to the attached figures, fig. 1 shows a wheel 10 for a bicycle comprising a rim 11 and central flanges 12 axially holed through which the hub, not shown here, passes.

The rim 11 and the flanges 12 are connected together by spokes 13, advantageously pre-tensed. The rim 11 is normally made of aluminum or similar metal material and defines, normally on both its sides, tracks, o strips, 14; each of the tracks 14 is suitable to cooperate with a relative braking element, in this case a brake pad 15, so as to exert, through friction, a braking action on the bicycle.

The tracks 14 are normally substantially plane and parallel, turned and smoothed. According to a first variant, these tracks 14 are inclined with respect to the plane on which the wheel 10 lies, while, according to another variant, these tracks 14 are substantially plane but at an angle to each other.

According to another variant, the tracks 14 have a curved concave development while, according to another variant, these tracks 14 have a curved convex development.

The description of a wheel for bicycles cooperating with a brake pad 15 must only be considered as an example, since the teaching of the invention can be extended, substantially in the same way, to applications on motor cycles and mopeds, and also on motor cars which have disk brakes, drum brakes or other type.

In the case shown in fig. 1, on each of these tracks 14 there are three seatings 16 consisting of circumferential channels 116, between 1 and 10 mm wide, advantageously between 1 and 4 mm, which are filled with material with a high friction coefficient 17, for example resinous material.

In a preferential embodiment, loads of abrasion-resistant material are added to the material with a high friction coefficient. This resinous material can comprise epoxy resins, epovinylic resins, vinylesters or other types with analogous or similar characteristics. Such resins also have good characteristics of adherence to the metal material into which they are inserted. According to a variant, this material is of the bi-component type.

The loads of abrasion-resistant material comprise, in a first embodiment, metal powders or granules of titanium or stainless steel. In another embodiment, these loads comprise ceramic powders or granules of alumina, tungsten, boron carbide or other analogous or similar materials.

With the embodiment according to the invention, the brake pad 15, or other braking element, acts on a mixed "lined" track, which in this case consists of metal-resin; this achieves a braking action with greater plastic and modifiable characteristics, even when a slight force is applied by the user to the brake lever and hence when there is less pressure applied by the brake pad 15 to the tracks 14.

Moreover, the presence of a mixed track causes that less water is retained and therefore there is less risk of slipping phenomena due to the aquaplaning effect between the braking track 14 and the brake pad 15.

The presence of the circumferential channels 116 containing loaded resinous material 17 allows to reduce the overall wear both on the brake pad 15 or other braking element, and also on the tracks 14 themselves, increasing the working life of the braking system in conditions of efficiency.

It is obvious that instead of three channels 116, for example from 1 to 4 mm wide, as in the case shown here, there may be only one circumferential channel filled with loaded resinous material 17, or two, four or more channels 116.

It is also obvious that the number, size and arrangement of the circumferential channels 116 on one side and the other of the rim 11 can be the same or different from each other.

The materials used, both for the resin 17 which fills the channels 116 and also for the added loads, can be those indicated, or others having analogous or similar characteristics.

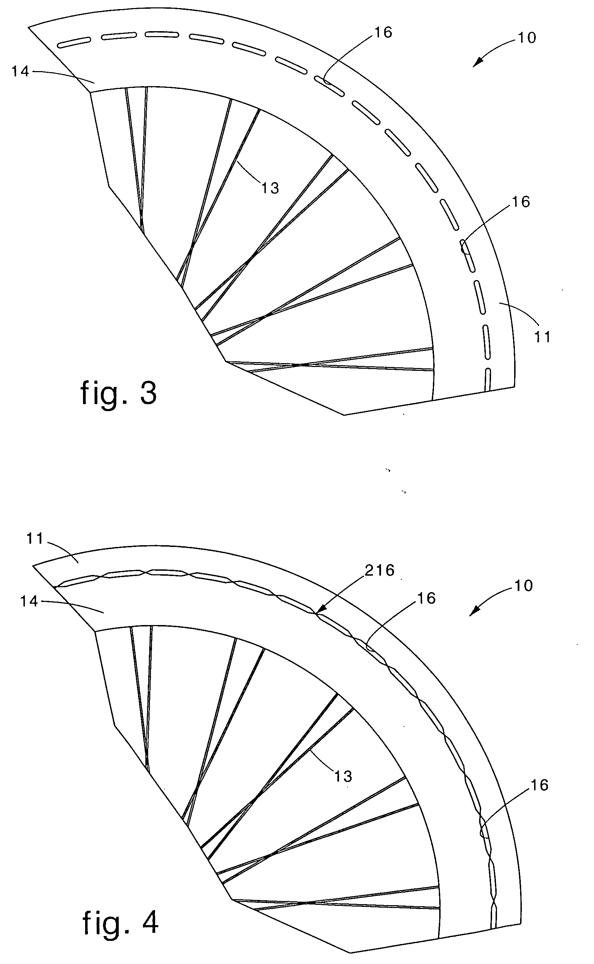

According to the first variant shown in fig. 3, instead of one or more continuous circumferential channels 116, the wheel 10, on at least one of said tracks 14, has a plurality of seatings 16, arranged discontinuously substantially along at least one circumference cooperating with the braking element 15. Each of these seatings 16 is filled with material with a high friction coefficient, to which possibly metal or ceramic loads have been added.

According to the other variant shown in fig. 4, on at least one of said tracks 14 there is a plurality of seatings 16 arranged continuously along at least one circumference cooperating with the braking element 15, but including variations in width 216, in this case reductions, distributed at regular intervals along said circumference.

The presence of discontinuous seatings 16 (fig. 3), or continuous seatings with periodic variations in section (fig. 4), achieves a braking effect comparable, to a certain extent, to the anti-blocking effect provided on motor cars. This gives even greater efficiency to the braking action and a further increase in the convenience of use for the user. The material with a high friction coefficient with which the seatings 16 are filled can be removable, even seating by seating, and replaceable in the event of early and localized wear, or to vary the braking characteristics according to the requirements of the specific user.

The material with a high friction coefficient can be fixed in the respective seatings by means of any type of suitable adhesive or primer, for example mono- or bi-component, thermo-adhesive, epoxy or otherwise.

Modifications and/or additions of parts can be made to the wheel 10 as described heretofore, but these shall remain within the field and scope of the present invention.

## Claims

1. Wheel for bicycles, motor cycles, mopeds, or motor cars, including a rim (11) defining, on at least one side, at least a strip (14) able to cooperate with a respective braking element (15), **characterized in that** on said at least one strip (14) there is at least a circumferential seating (16) cooperating in coordination with said braking element (15), material with a high friction coefficient (17) being present in said circumferential seating (16).

2. Wheel as in claim 1, **characterized in that** loads are added to said material with a high friction coefficient (17).

3. Wheel as in claim 2, **characterized in that** said loads are of metal material, for example titanium or stainless steel.

4. Wheel as in claim 2, **characterized in that** said loads are of ceramic material, for example alumina, tungsten or boron carbide.

5. Wheel as in any claim hereinbefore, **characterized in that** said circumferential seating (16) has a width, on the outer part of said rim (11), comprised between 1 and 10 mm.

6. Wheel as in claim 5, **characterized in that** said circumferential seating (16) has a width, on the outer part of said rim (11), comprised between 3 and 7 mm.

7. Wheel as in any claim hereinbefore, **characterized in that** it comprises two or more concentric circumferential seatings (16).

8. Wheel as in any claim hereinbefore, **characterized in that** said circumferential seating (16) is of the continuous type.

9. Wheel as in any claim from 1 to 7 inclusive, **characterized in that** said circumferential seating (16) is of the discontinuous type.

10. Wheel as in any claim hereinbefore, **characterized in that** said circumferential seating (16) includes variations in width (216).

11. Wheel as in claim 10, **characterized in that** said variations in width (216) are distributed uniformly along said circumferential seating (16).

12. Wheel as in claim 1, **characterized in that** said material with a high friction coefficient (17) consists of resinous material.

13. Wheel as in claim 12, **characterized in that** said resinous material comprises epoxy resins.

14. Wheel as in claim 12, **characterized in that** said resinous material comprises epovinyl resins or vinylesters.

15. Wheel as in claim 12, **characterized in that** said resinous material is of the thermosetting type with a crystallization point at a temperature in the range of 140÷180 °C.

16. Wheel as in claim 1, **characterized in that** said material with a high friction coefficient (17) is a bi-component material and able to catalyze due to a chemical effect.

17. Wheel as in any claim hereinbefore, **characterized in that** said material with a high friction coefficient (17) is removable from the relative circumferential seating (16).

18. Wheel as in claim 16, **characterized in that** said material with a high friction coefficient (17) is replaceable.

19. Wheel as in any claim hereinbefore, **characterized in that** said material with a high friction coefficient is fixed in the relative seating (16) by means of a primer or an adhesive.

20. Wheel as in claim 19, **characterized in that** said primer or adhesive is of the structural, mono-component, bi-component, thermo-adhesive, cyanoacrylate, or epoxy type.

21. Wheel as in any claim hereinbefore, **characterized in that** said braking track (14) is at least partly plane.

22. Wheel as in any claim from 1 to 20 inclusive, **characterized in that** said braking track (14) is at least partly defined by a convex curve.

23. Wheel as in any claim from 1 to 20 inclusive, **characterized in that** said braking track (14) is at least partly defined by a concave curve.
